# EUROPÄISCHE PATENTSCHRIFT

(11) **EP 3 985 294 B1**
(45) Veröffentlichungstag und Bekanntmachung des Hinweises auf die Patenterteilung: **27.09.2023**
(21) Anmeldenummer: 21200614.2
(22) Anmeldetag: 04.10.2021
(51) Int. Cl.: F16L 23/028, F16L 47/02, F16L 47/14, F16L 23/22, F16J 15/06, B29C 65/34, B29C 65/50, B29C 65/56, B29C 65/72, B29C 65/76, B29C 65/00, B29K 621/00

(54) **FLANSCHVERBINDUNG**
FLANGE CONNECTION
RACCORD À BRIDE

(30) Priorität: 16.10.2020 CH 13292020
(43) Veröffentlichungstag der Anmeldung: 20.04.2022
(73) Patentinhaber: Georg Fischer Rohrleitungssysteme AG, 8201 Schaffhausen (CH)
(72) Erfinder: Hasific, Edin, 8200 Schaffhausen (CH); Rösch, Jürgen, 79853 Lenzkirch (DE)
(74) Vertreter: Fenner, Seraina

(56) Entgegenhaltungen:
- KR-B1- 101 518 838
- US-A- 4 702 498
- US-B1- 6 260 854

## Beschreibung

Die Erfindung betrifft eine Flanschverbindung zum Verbinden von zwei Rohrleitungsenden aus Kunststoff, beinhaltend zwei sich gegenüberliegende Rohrenden aus Kunststoff, wobei die Rohrenden jeweils einen Vorschweissbund aufweisen, zwei Losflansche, wobei an jedem Rohrende jeweils ein Losflansch angeordnet ist, wobei die Losflansche Bohrungen zum gegenseitigen Zusammenspannen aufweisen, Spannmittel, wobei die Spannmittel in den Bohrungen angeordnet sind und zum gegenseitigen Zusammenziehen der Losflansche und der Rohrleitungsenden dienen, und ein Dichtelement.

Die WO 2016/184801 A1 offenbart eine Flanschverbindung bei der die Heizwendel zum Erwärmen des Kunststoffs in den Flanschen angeordnet sind und die beiden sich zugewandten Stirnflächen der Flansche unmittelbar und ohne Zwischenbauteil miteinander verschweisst werden.

Die GB 2 431 135 A offenbart ebenfalls einen Flansch aus einem thermoplastischen Material in dem stirnseitig ein Heizdraht eingearbeitet ist und ein Dichtelement, welches an der Stirnseite des Flansches angeordnet ist.

Die US 2003/0075919 A1 offenbart eine Flanschverbindung bei der zwischen den Vorschweissbünden der Rohrenden ein Schweisseinsatz angeordnet ist, wobei der Schweisseinsatz eine Scheibe beinhaltet die aus Kunststoff ist und von leitenden Drähten umgeben wird um den Kunststoff wie auch die Rohrenden für eine Verschweissung zu erwärmen.

Die US 6 398 264 B1 offenbart eine Vorrichtung zum thermischen Aktivieren bzw. Erwärmen von Rohrleitungsenden. Um die Rohrleitungsenden dicht miteinander zu verbinden wird an die beiden Stirnseiten ein Heizelement platziert das die Enden erwärmt und auf das geleichzeitig ein Dichtmittel appliziert wird, welches zuvor am Heizelement angebracht war. Das ermöglicht nach dem Entfernen der Vorrichtung ein dichtes, stirnseitiges Zusammenführen der Rohleitungsenden.

Die US 4 702 498, die US 6 260 854 B1 und die KR 101 518 838 B1 offenbaren alternative Flanschverbindungen.

Nachteilig an den oben erwähnten Verbindungen ist, dass die Flanschverbindungen nach einiger Zeit undicht werden da der Kunststoff zu kriechen beginnt. Dies kann, wenn mechanische Spannmittel vorhanden sind durch regelmässiges Nachjustieren bzw. Nachspannen der Verbindung behoben werden, wobei solche Flanschverbindungen meist bei eingebauten Rohrleitungen schwer zugänglich sind und ein Nachspannen nur begrenzt möglich ist. Des Weiteren können die oben erwähnten Flanschverbindungen für Wartungszwecke nicht gelöst und erneut verschraubt werden bzw. dieselben Teile wiederverwendet werden, da die Teile keine erneute Dichtheit gewährleisten.

Es ist Aufgabe der Erfindung eine Flanschverbindung und ein damit verbundenes Verfahren zur Montage vorzuschlagen, dass die Dichtheit über einen längeren Zeitraum gewährleistet wie auch, dass die regelmässigen Einsätze des Nachspannens der Flanschverbindung verringert werden soll. Des Weiteren sollen Montagefehler wie auch, dass nach einer Wartung das gleiche Dichtelement nicht mehr verwendet werden kann, vermieden werden.

Diese Aufgabe wird erfindungsgemäss dadurch gelöst, dass das Dichtelement aus einem leitenden Kunststoff und ausschliesslich aus einem Material besteht.

Die erfindungsgemässe Flanschverbindung zum Verbinden von zwei Rohrleitungsenden aus Kunststoff beinhaltet zwei sich gegenüberliegende Rohrenden aus Kunststoff. Die Rohrenden weisen jeweils einen Vorschweissbund auf. Die erfindungsgemässe Flanschverbindung beinhalet zudem zwei Losflansche, wobei an jedem Rohrende jeweils ein Losflansch angeordnet ist.

Die Losflansche weisen Bohrungen zum gegenseitigen Zusammenspannen auf, wobei die erfindungsgemässe Flanschverbindung Spannmittel beinhaltet, die in den Bohrungen angeordnet sind und zum gegenseitigen Zusammenziehen der Losflansche und der Rohrleitungsenden dienen.

Durch das Zusammenziehen der Losflansche werden entsprechend auch die bevorzugt konzentrisch darin angeordneten Rohrenden mit den Vorschweissbünden gegenseitig zusammengezogen. Zudem beinhaltet die erfindungsgemässe Flanschverbindung ein Dichtelement, wobei das Dichtelement aus einem leitenden Kunststoff und ausschliesslich aus einem Material besteht.

Durch den leitenden Kunststoff ist das Dichtelement mittels zugeführtem Strom heizbar. Das Dichtelement weist somit keine weiteren Einzelteile auf bzw. das Dichtelement ist einteilig ausgebildet. Dies hat den Vorteil, dass kein zusätzlicher Montageaufwand erfordert wird. Des Weiteren hat es den Vorteil, dass kein Drahtaustritt wie bei herkömmlichen Dichtungen mit integriertem Heizdraht erfolgen kann. Dadurch, dass das Dichtelement nicht nur an die Vorschweissbünde gepresst wird sondern auch an denen angeschweisst bzw. mit denen verschweisst wird, ist eine höhere Dichtheit der Flanschverbindung gewährleistet.

Das Dichtelement ist vorzugsweise im Spritzgussverfahren hergestellt und als Spritzgussteil ausgebildet.

Der Losflansch, der für das Zusammenspannen der Rohrenden eingesetzt wird, kann als Kunststoff- wie auch als Metallteil ausgebildet sein. Selbstverständlich kann der Losflansch auch aus einem Verbundmaterial hergestellt sein.

Vorzugsweise ist der leitende Kunststoff des Dichtelements homogen ausgebildet. Dadurch leitet das Dichtelement den Strom gleichmässig und wird gleichmässig erwärmt. Durch die Erwärmung des Dichtelements wird das Material weicher und das Dichtelement passt sich besser der Oberfläche der Stirnseite der Vorschweissbünde an und es wird ein optimaler Formschluss zwischen Dichtelement und Vorschweissbund erzielt. Zudem kann bei einer bestimmten Materialkombination zwischen Dichtelement und Vorschweissbund neben dem Formschluss auch ein Stoffschluss erzielt werden.

Als vorteilhaft hat sich gezeigt, wenn ausschliesslich das Dichtelement zwischen den sich gegenüberliegenden Vorschweissbünden angeordnet ist. Dies hat den Vorteil, dass keine weiteren Teile bei der Montage vergessen gehen können und somit das Risiko einer unzureichenden Verbindung reduziert wird.

Als bevorzugtes Material für das Dichtelement wird ein elektrisch leitendes thermoplastisches Elastomer (TPE) verwendet. Vorzugsweise ist das TPE elastisch ausgebildet wodurch die Dichtfähigkeit optimiert ist. Durch die Erwärmung durch den zugeführten Strom wird das Dichtelement aus thermoplastischem Elastomer weicher und passt sich optimal an der Oberfläche der Stirnseite der Vorschweissbünde an.

Vorzugsweise sind am Dichtelement Kontaktelemente zur Stromzuführung angeordnet, vorzugsweise aus einem leitenden Material, wobei das Material nicht identisch mit dem Material des Dichtelements sein muss.

Als bevorzugte Ausführungsform hat sich gezeigt, wenn der Vorschweissbund aus Polyethylen (PE) ist. In Kombination mit dem Dichtelement aus einem elektrisch leitenden thermoplastischen Elastomer gehen die beiden Kunststoffe eine stoffschlüssige Verbindung ein, was wiederum die Gewährleistung der Dichtheit der erfindungsgemässen Flanschverbindung erhöht.

Als vorteilhaft hat sich auch gezeigt, wenn der Vorschweissbund stirnseitig Rillen aufweist. In die Rillen wird beim Zusammenspannen der Verbindung das Dichtelement hineingepresst und gewährleistet dadurch eine formschlüssige Verbindung, welche hohen Drücken standhält.

Gemäss einer bevorzugten Ausführungsform sind die Rillen im Vorschweissbund als konzentrisch verlaufende Kreise ausgebildet.

Die Aufgabe wird erfindungsgemäss auch durch ein Verfahren nach Anspruch 9 gelöst. Bei diesem Verfahren zum Montieren einer erfindungsgemässen Flanschverbindung wird das Dichtelement bereits an der Stirnseite eines Vorschweissbunds verliersicher angeordnet, bevor das Anordnen der Losflansche an den sich gegenüberliegenden Rohrenden und das Zusammenspannen erfolgt.

Als vorteilhaft hat sich auch gezeigt, dass das Dichtelement durch erneutes Erwärmen vom Vorschweissbund gelöst werden kann und nach Reinigen des Vorschweissbunds und des Dichtelements erneut verwendet werden kann.

Das erfindungsgemässe Verfahren zum Montieren einer Flanschverbindung weist folgende Schritte auf:
Anordnen der Losflansche an sich gegenüberliegenden Rohrenden aus Kunststoff, Zusammenspannen der Losflansche mittels Spannmittel, wobei das Zusammenspannen nur bis zu einer leichten Vorspannung erfolgt.

Anschliessend wird ein elektrischer Strom auf ein leitendes Dichtelement aufgebracht, wobei das leitende Dichtelement zwischen den Rohrenden bzw. den Vorschweissbünden der Rohrenden angeordnet ist. Durch das Zuführen des Stroms an das Dichtelement wird eine Verschweissung zwischen mindestens einer Seite des Dichtelements und einem Vorschweissbund erzielt. Anschliessend erfolgt das Zusammenspannen der Losflansche mittels Spannmittel bis zu einem geforderten Anzugsmoment. Beim erfindungsgemässen Verfahren zum Montieren einer Flanschverbindung ist das leitende Dichtelement bereits an der Stirnseite eines Vorschweissbunds verliersicher angeordnet bevor das Anordnen der Losflansche an den sich gegenüberliegenden Rohrenden und das Zusammenspannen erfolgt. Vorzugsweise wird das Dichtelement bereits im Werk an der Stirnseite eines Vorschweissbundes befestigt, das kann bereits durch ein Erwärmen des leitenden Dichtelements mittels Strom und demzufolge einem Verschweissen des Dichtelements mit dem Vorschweissbund erfolgen oder alternativ kann das Dichtelement auch provisorisch mit einem Klebstoff oder einem mechanischen Befestigungsmittel befestigt werden, welches vor dem Schweissvorgang entfernt wird. Dies bringt den Vorteil mit sich, dass das Dichtelement nicht vergessen werden kann und dadurch das Risiko von Montagefehlern verringert wird. Wie auch gewährleistet ist, dass das richtige Dichtelement für die entsprechende Flanschverbindung verwendet wird.

Beim erfindungsgemässen Verfahren besteht der Vorteil, dass das Dichtelement nach einem ersten Erwärmen erneut erwärmt werden kann. Sei es um das Dichtelement vom Vorschweissbund zu entfernen, wobei das alternativ ohne Erwärmung auch durch Abtrennen erfolgen kann oder für ein erneutes Anschweissen an den Vorschweissbund, beispielsweise aufgrund einer benötigten Justierung der Flanschverbindung aufgrund einer Verschiebung der Rohrleitung oder anderen Anpassungen.

Alle Ausgestaltungmöglichkeiten sind untereinander frei kombinierbar sowie Merkmale des Verfahrens auf die Flanschverbindung und umgekehrt anwendbar sind.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Schnittdarstellung einer erfindungsgemässen Flanschverbindung und
- Fig. 2: eine dreidimensionale Darstellung einer erfindungsgemässen Flanschverbindung.

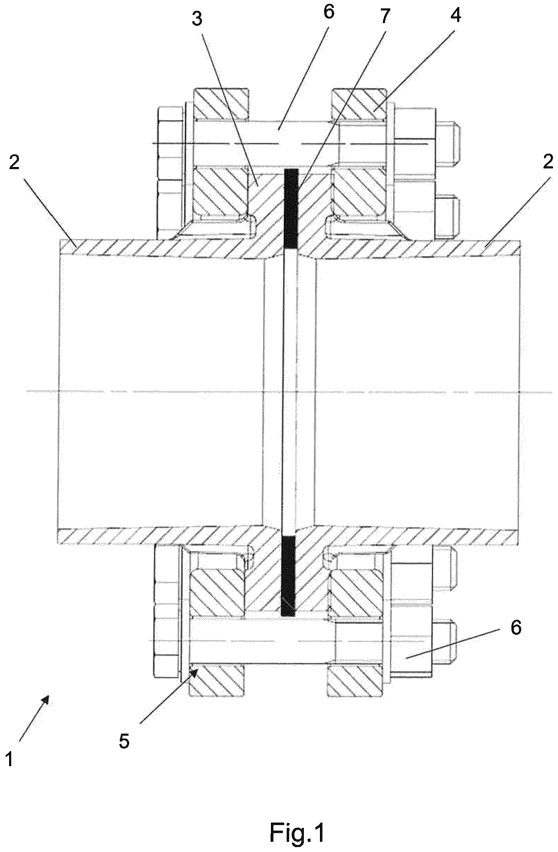

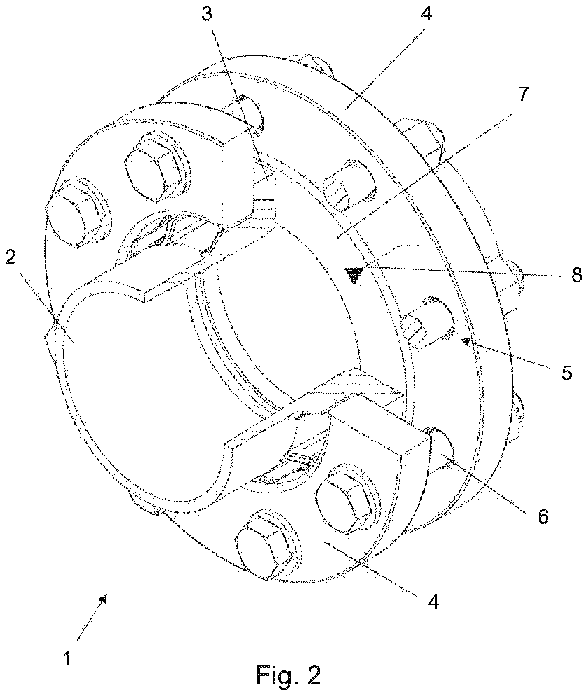

Die in Fig. 1 dargestellte Zeichnung zeigt eine Schnittansicht einer erfindungsgemässen Flanschverbindung 1 zum Verbinden von Rohrleitungsenden aus Kunststoff. Die Flanschverbindung 1 beinhaltet zwei sich gegenüberliegende Rohrenden 2 aus Kunststoff, wobei die Rohrenden konzentrisch zueinander angeordnet sind. Die Rohrenden 2 weisen jeweils einen Vorschweissbund 3 auf über den sie miteinander gegenseitig verspannt werden, dies ist auch gut aus Fig. 2 zu erkennen. An den Rohrenden 2 sind jeweils Losflansche 4 angeordnet, die mithilfe von Spannmittel 6 gegenseitig miteinander zusammengespannt sind. Die Vorschweissbünde 3 der Rohrenden 2 sind zwischen den Losflanschen 4 angeordnet und werden über diese zusammengepresst. Die Spannmittel 6 sind in den dafür vorgesehenen Bohrungen 5 in den Losflanschen 4 angeordnet und sind vorzugsweise gleichmässig verteilt. Zwischen den beiden Vorschweissbünden 3 ist ein Dichtelement 7 angeordnet, wobei das Dichtelement 7 aus einem leitenden Kunststoff besteht. Zur Verbesserung der Dichtheit wird das Dichtelement 7 mittels Strom erwärmt was wiederum das Material des Dichtelements 7 weicher macht und es sich dadurch beim Verspannen der Flansche besser an die Stirnseiten der Vorschweissbünde 3 anschmiegt und entsprechend gut dichtet. Zur Stromzuführung werden Kontaktelemente 8 verwendet die am Dichtelement 7 angeordnet sind. Die Kontaktelement 8 sind in der Fig. 2 rein schematisch dargestellt, deren Ausgestaltung wird entsprechend der Anschlussmöglichkeiten bzw. der Zugänglichkeit der Flanschverbindung gestaltet. Neben dem dadurch erzielten optimalen Formschluss kann bei einer entsprechenden Materialwahl von Dichtelement und Vorschweissbund 3 auch ein Stoffschluss erreicht werden, der wiederum zur Verbesserung einer dichten Flanschverbindung beiträgt. Das Dichtelement 7 ist für die Montage bereits an einem Vorschweissbund 3 eines Rohrendes befestig, wodurch gewährleistet ist das es nicht vergessen oder verloren geht wie auch, dass nicht das falsche montiert wird.

### Bezugszeichenliste

- 1: Flanschverbindung
- 2: Rohrende
- 3: Vorschweissbund
- 4: Losflansch
- 5: Bohrung
- 6: Spannmittel
- 7: Dichtelement
- 8: Kontaktelemente

## Patentansprüche

1. Flanschverbindung (1) zum Verbinden von zwei Rohrleitungsenden aus Kunststoff, beinhaltend zwei sich gegenüberliegende Rohrenden (2) aus Kunststoff, wobei die Rohrenden (2) jeweils einen Vorschweissbund (3) aufweisen, zwei Losflansche (4), wobei an jedem Rohrende (2) jeweils ein Losflansch (4) angeordnet ist, wobei die Losflansche (4) Bohrungen (5) zum gegenseitigen Zusammenspannen aufweisen, Spannmittel (6), wobei die Spannmittel (6) in den Bohrungen (5) angeordnet sind und zum gegenseitigen Zusammenziehen der Losflansche (4) und der Rohrleitungsenden dienen, und ein Dichtelement (7), **dadurch gekennzeichnet, dass** das Dichtelement (7) aus einem leitenden Kunststoff und ausschliesslich aus einem Material besteht.

2. Flanschverbindung (1) nach Anspruch 1, **dadurch gekennzeichnet, dass** das Dichtelement (7) einteilig ausgebildet ist.

3. Flanschverbindung (1) nach einem der Ansprüche 1 oder 2, **dadurch gekennzeichnet, dass** der leitende Kunststoff homogen ausgebildet ist.

4. Flanschverbindung (1) nach einem der Ansprüche 1 oder 3, **dadurch gekennzeichnet, dass** ausschliesslich das Dichtelement (7) zwischen den sich gegenüberliegenden Vorschweissbunden (3) angeordnet ist.

5. Flanschverbindung (1) nach einem der Ansprüche 1 bis 4, **dadurch gekennzeichnet, dass** das Dichtelement (7) aus einem leitenden thermoplastischen Elastomeren (TPE) besteht.

6. Flanschverbindung (1) nach einem der Ansprüche 1 bis 5, **dadurch gekennzeichnet, dass** der Vorschweissbund (3) aus Polyethylen (PE) ist.

7. Flanschverbindung (1) nach einem der Ansprüche 1 bis 6, **dadurch gekennzeichnet, dass** der Vorschweissbund (3) stirnseitig Rillen aufweist.

8. Flanschverbindung (1) nach Anspruch 7, **dadurch gekennzeichnet, dass** die Rillen im Vorschweissbund (3) als konzentrisch verlaufende Kreise ausgebildet sind.

9. Verfahren zum Montieren einer Flanschverbindung (1) nach einem der Ansprüche 1 bis 8, mit den Schritten:
Anordnen der Losflansche (4) an sich gegenüberliegenden Rohrenden (2) aus Kunststoff, Zusammenspannen der Losflansche (4) mittels Spannmittel (6),
wobei das Zusammenspannen nur bis zu einer leichten Vorspannung erfolgt,
Aufbringen von elektrischem Strom auf ein leitendes Dichtelement (7), wobei das leitende Dichtelement (7) zwischen den Rohrenden (2) bzw. den Vorschweissbunden (3) an den Rohrenden (2) angeordnet ist, um eine Verschweissung zwischen mindestens einer Seite des Dichtelements (7) und
einem Vorschweissbund (3) durchzuführen, anschliessendes Zusammenspannen der Losflansche (4) mittels Spannmittel (6) bis zu einem geforderten Anzugsmoment, wobei das Dichtelement (7) bereits an der Stirnseite eines Vorschweissbunds (3) verliersicher angeordnet ist, bevor das Anordnen der Losflansche (4) an den sich gegenüberliegenden Rohrenden (2) und das Zusammenspannen erfolgt.

10. Verfahren zum Montieren einer Flanschverbindung (1) nach Anspruch 9, **dadurch gekennzeichnet, dass** das Dichtelement (7) durch erneutes Erwärmen vom Vorschweissbund (3) gelöst werden kann und nach Reinigen des Vorschweissbunds (3) und des Dichtelements (7) erneut verwendet werden kann.

## Claims

1. Flange connection (1) for connecting two pipeline ends made of plastic, including two pipe ends (2) located opposite one another made of plastic, wherein the pipe ends (2) each comprise a weld stub (3), two loose flanges (4), wherein at each pipe end (2) a loose flange (4) is in each case arranged, wherein the loose flanges (4) comprise bores (5) for the mutual clamping together, clamping means (6), wherein the clamping means (6) are arranged in the bores (5) and serve for the mutual pulling together of the loose flanges (4) and of the pipeline ends, and
a sealing element (7),
**characterised in that**
the sealing element (7) consists of a conductive plastic and exclusively of one material.

2. Flange connection (1) according to Claim 1,
**characterised in that**
the sealing element (7) is formed integrally.

3. Flange connection (1) according to any one of the Claims 1 or 2,
**characterised in that**
the conductive plastic is formed homogeneously.

4. Flange connection (1) according to any one of the Claims 1 or 3,
**characterised in that**
exclusively the sealing element (7) is arranged between the weld stubs (3) located opposite one another.

5. Flange connection (1) according to any one of the Claims 1 to 4,
**characterised in that**
the sealing element (7) consists of a conductive thermoplastic elastomer (TPE).

6. Flange connection (1) according to any one of the Claims 1 to 5,
**characterised in that**
the weld stub (3) is made of polyethylene (PE).

7. Flange connection (1) according to any one of the Claims 1 to 6,
**characterised in that**
the weld stub (3) comprises grooves on the end face.

8. Flange connection (1) according to Claim 7,
**characterised in that**
the grooves in the weld stub (3) are formed as concentrically running circles.

9. Method for assembling a flange connection (1) according to any one of the Claims 1 to 8, with the steps:
arranging the loose flanges (4) on pipe ends (2) located opposite one another made of plastic, clamping together the loose flanges (4) by means of clamping means (6), wherein the clamping together takes place only up to a slight preload,
applying electric current to a conductive sealing element (7), wherein the conductive sealing element (7) is arranged between the pipe ends (2) or the weld stubs (3) at the pipe ends (2), in order to perform a welding together between at least one side of the sealing element (7) and a weld stub (3),
subsequent clamping together of the loose flanges (4) by means of clamping means (6) up to a required tightening torque, wherein the sealing element (7) is already captively arranged on the end face of a weld stub (3), before the arranging of the loose flanges (4) on the pipe ends (2) located opposite one another and the clamping together take place.

10. Method for assembling a flange connection (1) according to Claim 9,
**characterised in that**
the sealing element (7) can be detached from the weld stub (3) through renewed heating and following cleaning of the weld stub (3) and of the sealing element (7) can be used again.

## Revendications

1. Raccord à bride (1) destiné à raccorder deux extrémités de conduite tubulaire en matière synthétique, contenant deux extrémités de tube opposées (2) en matière synthétique, les extrémités de tube (2) comportant chacune une collerette à souder (3), deux brides libres (4), une bride libre (4) étant disposée à chaque extrémité de tube (2), les brides libres (4) comportant des alésages (5) destinés à les serrer l'une contre l'autre, des moyens de serrage (6), les moyens de serrage (6) étant disposés dans les alésages (5) et servant à rapprocher les brides libres (4) et les extrémités de conduite tubulaire, et un élément d'étanchéité (7), **caractérisé en ce que** l'élément d'étanchéité (7) est en une matière synthétique conductrice et exclusivement en une matière.

2. Raccord à bride (1) selon la revendication 1, **caractérisé en ce que** l'élément d'étanchéité (7) est conçu d'une seule pièce.

3. Raccord à bride (1) selon l'une des revendications 1 ou 2, **caractérisé en ce que** la matière synthétique conductrice est formée de manière homogène.

4. Raccord à bride (1) selon l'une des revendications 1 et 3, **caractérisé en ce que** seul l'élément d'étanchéité (7) est disposé entre les collerettes à souder opposées (3) .

5. Raccord à bride (1) selon l'une des revendications 1 à 4, **caractérisé en ce que** l'élément d'étanchéité (7) comprend un élastomère thermoplastique conducteur (TPE).

6. Raccord à bride (1) selon l'une des revendications 1 à 5, **caractérisé en ce que** la collerette à souder (3) est en polyéthylène (PE).

7. Raccord à bride (1) selon l'une des revendications 1 à 6, **caractérisé en ce que** la collerette à souder (3) comporte des rainures du côté frontal.

8. Raccord à bride (1) selon la revendication 7, **caractérisé en ce que** les rainures de la collerette à souder (3) sont conçues sous forme de cercles concentriques.

9. Procédé de montage d'un raccord à bride (1) selon l'une des revendications 1 à 8, ledit procédé comprenant les étapes suivantes :
disposer les brides libres (4) sur des extrémités de tubes opposées (2) en matière synthétique, serrer les brides libres (4) l'une contre l'autre à l'aide de moyens de serrage (6), le serrage n'étant effectué que jusqu'à une légère précontrainte, appliquer un courant électrique sur un élément d'étanchéité conducteur (7), l'élément d'étanchéité conducteur (7) étant disposé sur les extrémités de tubes (2) entre les extrémités de tube (2) ou les collerettes à souder (3) afin de réaliser une soudure entre au moins un côté de l'élément d'étanchéité (7) et une collerette à souder (3), serrer ensuite les brides libres (4) l'une contre l'autre à l'aide de moyens de serrage (6) jusqu'au couple de serrage requis, l'élément d'étanchéité (7) étant déjà disposé de manière imperdable sur le côté frontal d'une collerette à souder (3) avant que les brides libres (4) ne soient disposées sur les extrémités de tube opposées (2) et serrées l'une contre l'autre.

10. Procédé de montage d'un raccord à bride (1) selon la revendication 9, **caractérisé en ce que** l'élément d'étanchéité (7) peut être détaché de la collerette à souder (3) par réchauffage de la collerette à souder (3) et est réutilisé après nettoyage de la collerette à souder (3) et de l'élément d'étanchéité (7).
